# EUROPEAN PATENT APPLICATION

(11) **EP 4 159 557 A1**
(43) Date of publication of application: **05.04.2023**
(21) Application number: 21200165.5
(22) Date of filing: 30.09.2021
(51) Int. Cl.: B60T 1/00, B60T 13/74, F16D 55/226, F16D 63/00, F16D 65/18

(54) **ELECTRO-MECHANICAL BRAKE ACTUATOR AND CORRESPONDING LOCKING ACTUATOR**

(71) Applicant: ZF CV Systems Global GmbH, 3006 Bern (CH)
(72) Inventor: KOWALSKI, Przemyslaw, 51-180 Wroclaw (PL); TOMALA, Barolomiej, 45-267 Opole (PL)
(74) Representative: Ohlendorf, Henrike

(57) **Abstract**

The invention relates to an electro-mechanical brake actuator (6), in particular for a disc brake (4) of a commercial vehicle, said brake actuator (6) comprising an electric motor (8) comprising a motor shaft (12) for providing a driving torque, a push rod (436) being movable along a push rod longitudinal axis (438) between a retracted position (440) and an actuated position, a gear (10) coupled to the electric motor (8) and the push rod (436), wherein said gear (10) is configured to transform the torque of the motor (8) into a stroke of the push rod (436).

According to the invention, a locking means configured for selectively locking the push rod (436) in said actuated position is proposed. The invention also relates to a corresponding locking actuator (14, 114, 214, 314).

## Description

The present invention relates to an electro-mechanical brake actuator, in particular for a disc brake of a commercial vehicle, said brake actuator comprising an electric motor comprising a motor shaft for providing a driving torque, a push rod being movable along a push rod longitudinal axis between a retracted position and an actuated position, and a gear coupled to the electric motor and the push rod, wherein said gear is configured to transform the torque of the motor into a stroke of the push rod.

Electro-mechanical brake actuators of the aforementioned kind are used in the commercial vehicle industry. Such actuators are based upon the working principle that a torque of an electric motor is transformed by means of a gear into a push rod stroke to actuate the vehicle brake. When the actuator operates in reaction to a driver's input to generate a brake force, this is called "service-brake" function.

For commercial vehicles, it is additionally desirable to provide a so-called parking brake functionality at which the brake is closed permanently to prevent a parked vehicle form unwanted movements. When utilizing electro-mechanical brake actuators, it is known to generate a permanent torque by the motor to keep the push rod in an actuated position to close the vehicle brakes during parking. Applying such a permanent torque, however, may damage the motor. Furthermore, a permanent supply of electrical power is required, which is unwanted.

Consequently, it has been an object of the invention to provide an electro-mechanical brake actuator of the aforementioned type comprising an improved parking brake functionality, which does not require the provision of a permanent torque from the electric motor and - in turn - no permanent supply of electric energy.

The invention attains this object by providing an electro-mechanical brake actuator according to claim 1. In particular, the invention attains this object in an embodiment where the electro-mechanical brake actuator comprises a locking means configured for selectively locking the push rod in said actuated position.

The invention is based upon the finding that by providing a locking means configured for selectively locking the push rod in said actuated position, the actuator can provide a parking brake functionality without having to provide a permanent engine torque and requiring a permanent supply of energy to the electric motor. With the help of the locking means, a movement of the push rod out of the actuated position can be selectively blocked or released. In this way, also the stress on the electric motor and the gear is reduced.

According to a preferred embodiment, the locking means comprises a locking actuator configured for selectively locking the push rod in said actuated position, said locking actuator comprising a locking device that is configured to be moved between a locking position, in which the locking device blocks a movement of the push rod, and a released position, in which the locking device releases said push rod, and a locking device actuator configured for actuating said locking device between said locking position and said released position.

Electrical energy is only required to move the locking device into said locking position and afterwards, without any further action, the actuator will maintain said actuated or parking brake position without the requirement to supply additional energy. In this way, also malfunctions in the vehicle electric system would not affect the parking brake functionality of the actuator.

In a preferred embodiment, the locking device actuator comprises a spring element, wherein said spring element is configured for forcing the locking device into said locking position. In this way, the locking device actuator is automatically moved into said locking position, when no electrical energy is provided to the locking device actuator. Electrical energy is only required, when the locking device actuator needs to be moved into the release position. This configuration further increases the operational safety of the locking actuator in case of an unwanted loss of electrical energy.

According to another alternative embodiment, the locking device actuator comprises a linear actuator that is configured to move the locking device against the force of the spring element into said released position. Said linear actuator has been found to be both reliable and capable of providing the required actuating forces.

Preferably, the linear actuator comprises an electric motor and a gear box and/or a solenoid. In general, the combination of an electric motor and a gear box is capable of providing higher actuation forces, wherein a solenoid provides very low reaction times.

According to another preferred embodiment, said electro-mechanical brake actuator comprises a brake drum coupled to the electric motor, wherein the locking device comprises a brake shoe that is configured to be moved relative to the brake drum between the locking position, at which the brake shoe blocks a movement of the brake drum, and the released position, at which a movement of the brake drum is enabled. The use of the combination of a brake drum and a brake shoe has been found to be beneficial to provide a reliable parking brake functionality to the actuator.

According to another preferred embodiment, the brake shoe comprises an adjuster configured to adjust a clearance between the brake drum and the brake shoe. In this way, wear of the brake shoe can be compensated to some extent, to keep reaction times to a minimum.

Preferably, the brake shoe is arranged inside or outside of the brake drum. According to the yet another preferred embodiment, the brake drum is coupled to the motor shaft of the electric motor.

According to yet another preferred alternative embodiment, the locking device comprises a wedge lock that is configured to be moved between the locking position, in which the wedge lock blocks a movement of the motor, and a released position, at which a movement of the motor is enabled. Preferably, said wedge lock is slidably accommodated in a housing portion of the actuator. Said wedge lock provides an alternative to the drum brake arrangement of the previous embodiments. Said wedge lock may, for example, be implemented, when installation space is limited. Preferably, the motor shaft comprises a locking plate, wherein the wedge lock is configured to lock a movement of the locking plate. Preferably, the locking plate comprises one or more recesses, with which the wedge lock may engage to selectively block a movement of the locking plate and, in turn, the electric motor.

According to an alternative embodiment, the wedge lock is configured to lock a movement of the motor shaft. Preferably, the motor shaft comprises a recess or uprising to temporarily engage with said wedge lock.

According to another preferred embodiment, said locking means comprise said gear being configured as a self-locking gear. This means that an output shaft of the gear connected to the push rod cannot be moved by a torque applied to this shaft. In other words, the gear itself behaves like a brake. Thus, no additional locking actuator is required in this embodiment. After having moved the push rod into an actuated position, the actuator will remain in this position even if no further electric energy is supplied to the electric motor anymore.

According to a preferred embodiment, the self-locking gear is a self-locking worm gear. Preferably, a worm is attached to a shaft of the electric motor.

According to another preferred embodiment, the self-locking gear is part of a first gear stage and wherein the gear further comprises a second gear stage. With the help of this second gear stage, the gear ratio can be influenced as required.

The invention has hereinabove been described in a first aspect relating to an electro-mechanical brake actuator. In a second aspect, the invention further relates to a locking actuator for an electro-mechanical brake actuator of a commercial vehicle, in particular for a brake actuator of any one of the preceding claims, wherein said locking actuator is configured for selectively locking a push rod of the electro-mechanical brake actuator in an actuated position.

In the second aspect, the invention attains the object described above in that said locking actuator comprises a locking device that is configured to be moved between a locking position, in which the locking device blocks a movement of the push rod and a released position, in which the locking device releases said push rod, and a locking device actuator configured for actuating said locking device between said locking position and said released position.

The locking actuator of the second aspect takes advantage of the same benefits and encompasses the same preferred embodiments as the electro-mechanical brake actuator according the first aspect of the invention and vice versa. In order to avoid unnecessary repetitions, reference is therefore made to the above explanations.

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality.

This invention will now be described with reference to the accompanying drawings which illustrate, by way of example and not by way of limitation, one of several possible embodiments of the actuator proposed herein, and wherein:
- Fig. 1:: shows a preferred embodiment of a vehicle brake assembly comprising an electro-mechanical brake actuator according to the concept of the invention in a perspective view;
- Fig. 2a to 2c:: show preferred embodiments of locking actuators according to the concept of the invention in schematic views;
- Fig. 3:: shows an alternative embodiment of a locking actuator according to the concept of the invention in a schematic view;
- Fig. 4 to 5b:: show alternative embodiments of electro-mechanical brake actuators according to the concept of the invention in schematic views.

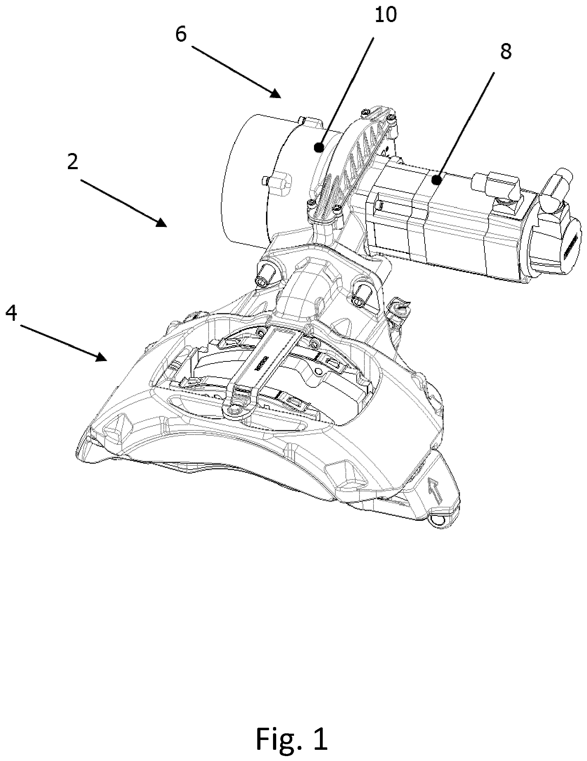

Fig. 1 shows a vehicle brake assembly 2. The vehicle brake assembly 2 comprises a vehicle disc brake 4 and an electro-mechanical brake actuator 6.

The electro-mechanical brake actuator 6 is coupled to the disc brake 4 and provides a working force to the disc brake 4.

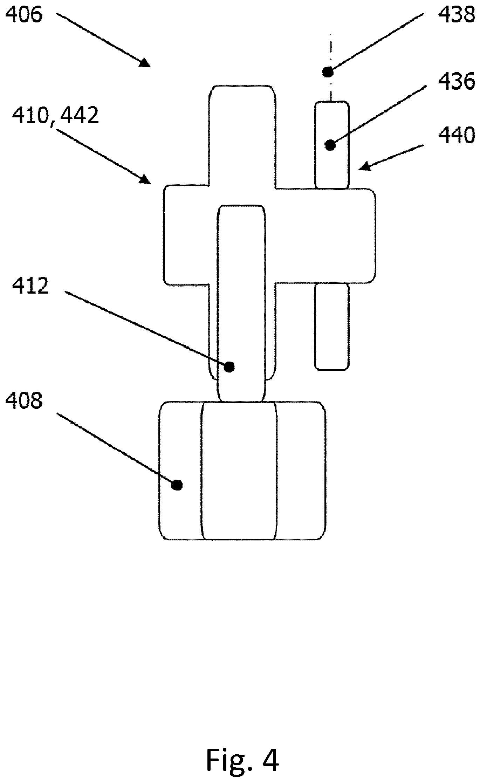

The brake actuator 6 comprises an electric motor 8. The electric motor 8 provides a driving torque. The brake actuator 6 furthermore comprises a gear 10. The gear 10 is coupled to the electric motor 8. The gear 10 is furthermore coupled to a push rod 436 (see Fig. 4), wherein said gear 10 is configured to transform the torque of the motor 8 into the stroke of the push rod 436 (see Fig. 4).

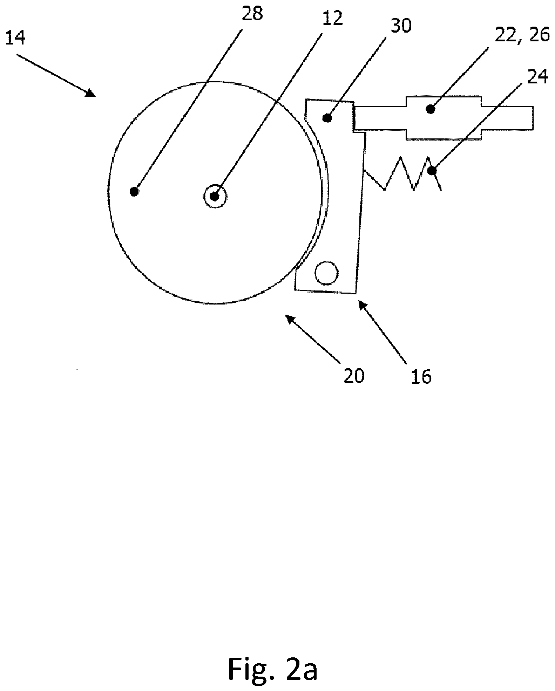

Fig. 2a shows a locking actuator 14. The locking actuator 14 is configured for selectively locking the push rod 436 (not shown) in an actuated position. The locking actuator 14 comprises a locking device 16. The locking device 16 is configured to be moved between a released position 20, as shown in Fig. 2a, and a locking position, which is not shown in Fig. 2a.

The locking device 16 furthermore comprises a locking device actuator 22. The locking device actuator 22 is configured for actuating said locking device 16 between said locking position and said released position 20. The locking device actuator 22 comprises a spring element 24. The spring element 24 is configured for forcing the locking device 16 into the locking position. The locking device actuator 22 comprises a linear actuator 26 that is configured to move the locking device 16 against the force of the spring element 24 into the release position 20.

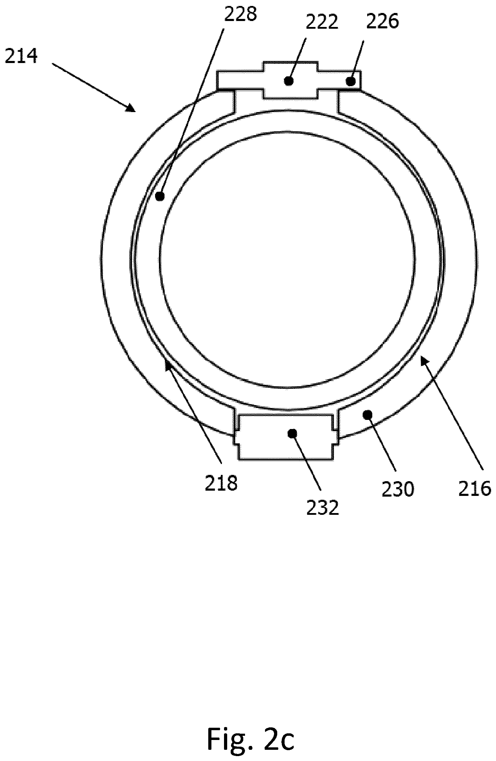

A motor shaft 12 is attached to the electric motor 8 (not shown in Fig. 2a, see Fig. 1). The motor shaft 12 is coupled to a brake drum 28. The locking device 16 comprises a brake shoe 30. The brake shoe 30 is configured to be moved relative to the brake drum 28 between a locking position 218 (see Fig. 2c), at which the brake shoe 30 blocks a movement of the brake drum 28, and the release position 20, at which a movement of the brake drum 28 is enabled.

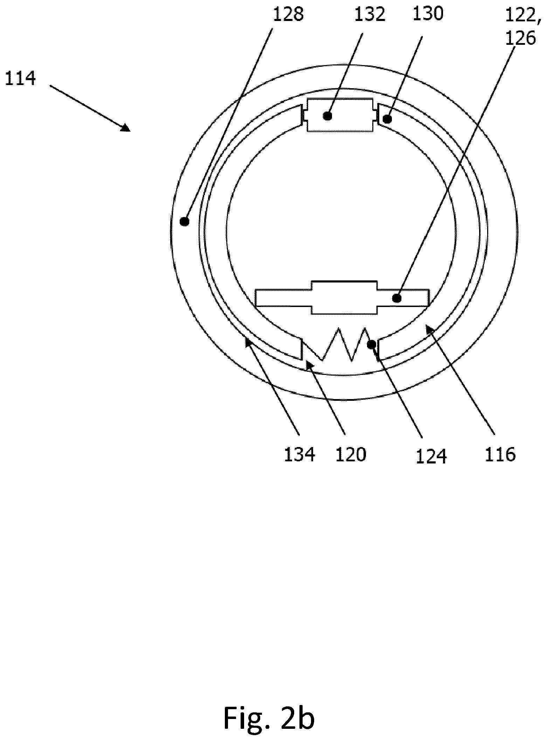

Fig. 2b shows an alternative embodiment of a locking actuator 114. The locking actuator 114 comprises a locking device 116 and a locking device actuator 122. The locking device actuator 122 comprises a spring element 124. The spring element 124 is configured for forcing the locking device 116 into a locking position (not shown in Fig. 2b). The locking device actuator 122 comprises a linear actuator 126. The linear actuator 126 is configured to move the locking device 116 against the force of the spring element 124 into a released position 120. The brake actuator 6 (see Fig.1) comprises a brake drum 128. The locking device 126 comprises a brake shoe 130 that is configured to be moved relative to the brake drum 128 to either lock or unlock the brake drum 128. The brake shoe 130 comprises an adjuster 132. The adjuster 132 is configured to adjust a clearance 134 between the brake drum 128 and the brake shoe 230. In Fig. 2b, the brake shoe 130 is arranged inside the brake drum 128.

Fig. 2c shows and alternative embodiment of a locking actuator 214. The locking actuator 214 is shown in a locking position 218. The locking actuator 214 comprises a locking device 216 that is coupled to a locking device actuator 222. The locking device actuator 222 is a linear actuator 226. The locking device 216 comprises a brake shoe 230 acting upon a brake drum 228. The brake shoe 230 comprises an adjuster 232 configured to adjust a clearance (see Fig. 2b) between the brake drum 228 and the brake shoe 230. In the embodiment of Fig. 2c, the brake shoe 230 is arranged outside of the brake drum 228.

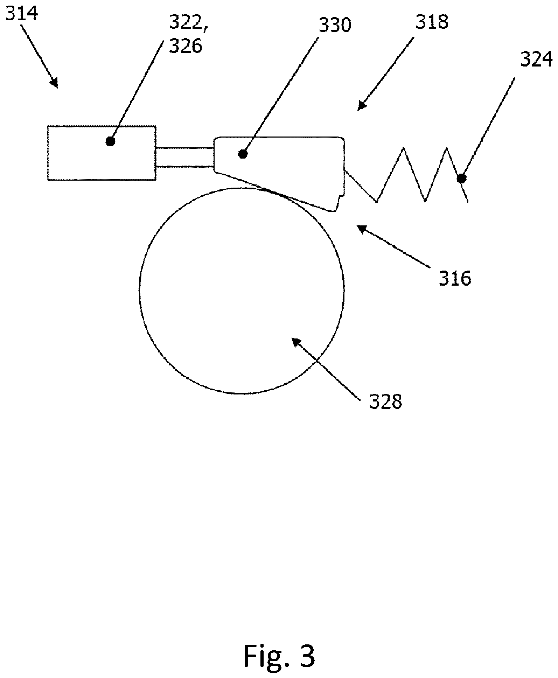

Fig. 3 shows an alternative embodiment of a locking actuator 314. The locking actuator 314 comprises a locking device 316. The locking device 316 is shown in a locking position 318. The locking device 316 is actuated by a locking device actuator 322. The locking device 316 comprises a wedge lock 330 that is configured to be moved between the locking position 318, in which the wedge lock 330 blocks a movement of a locking drum 328, and a release position (not shown), at which a movement of the locking drum 328 is enabled. The locking device actuator 322 is a linear actuator 326.

Fig. 4 shows an alternative embodiment of an electro-mechanical brake actuator 406. The electro-mechanical brake actuator 406 comprises an electric motor 408 to provide a driving torque, comprising a motor shaft 412. The electro-mechanical brake actuator 406 furthermore comprises a push rod 436. The push rod 436 is moveable along a push rod longitudinal axis 438 between a retracted position 440 and an actuated position (not shown).

The electro-mechanical brake actuator 406 moreover comprises a gear 410. The gear 410 is coupled to the electric motor 408 and the push rod 436. The gear 410 is configured to transform the torque of the motor 408 into a stroke of the push rod 436 along its longitudinal axis 438. The gear 410 is configured as a self-locking gear 442. The self-locking gear 442 is a self-locking worm gear 442.

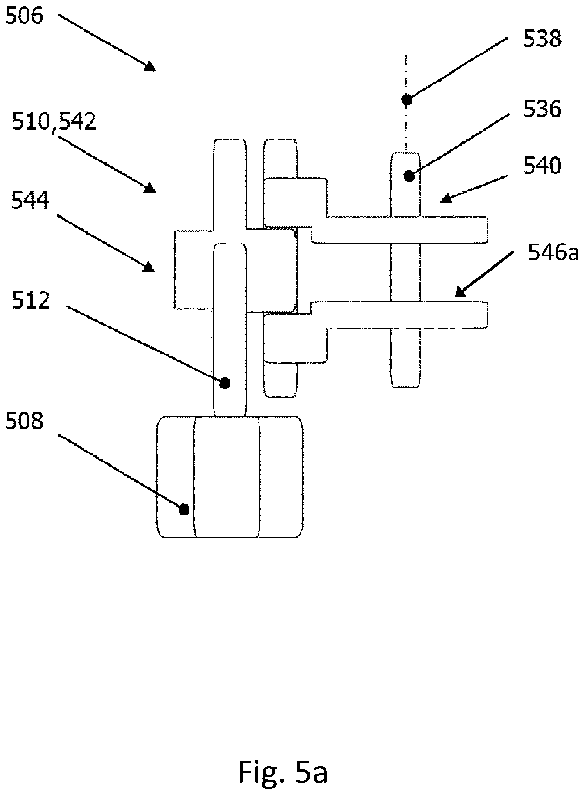

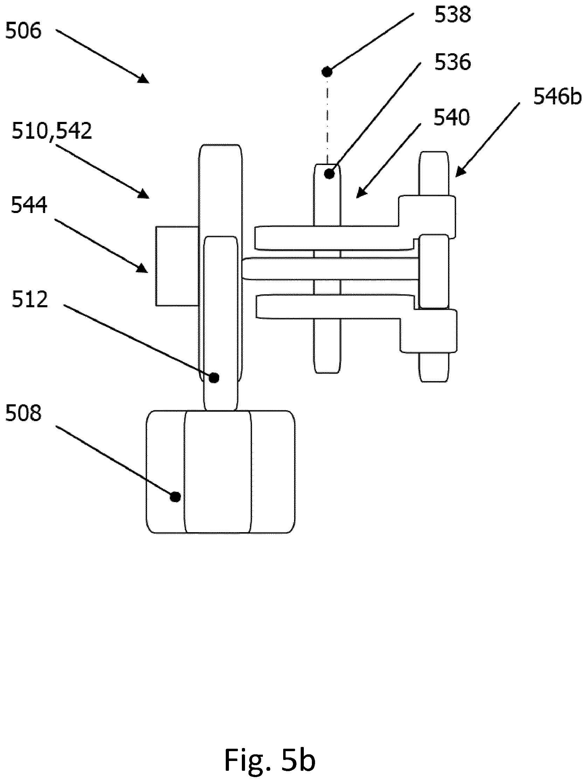

Figs. 5a and 5b show alternative embodiments of an electro-mechanical brake actuator 506. The electro-mechanical brake actuator 506 comprises an electric motor 508 comprising a motor shaft 512, a push rod 536 and a gear 510. The push rod 536 is moveable along a push rod longitudinal axis 538 between a retracted position 540 and an actuated position (not shown).

The gear 510 is coupled to the electric motor 508 and the push rod 536. The gear 510 is configured to transform the torque of the motor 508 into a stroke of the push rod 536 along its longitudinal axis 538. The gear 510 is configured as a self-locking worm gear 542. The self-locking gear 542 is part of a first gear stage 544. The gear 542 further comprises a second gear stage 546 a,b. The second gear stage 546 a,b is shown in different configurations in Fig. 5a and 5b.

### List of references (part of specification)

- 2: vehicle brake assembly
- 4: disc brake
- 6: electro-mechanical brake actuator
- 8: electric motor
- 10: gear
- 12: motor shaft
- 14: locking actuator
- 16: locking device
- 20: released position
- 22: locking device actuator
- 24: spring element
- 26: linear actuator
- 28: brake drum
- 30: brake shoe
- 114: locking actuator
- 116: locking device
- 120: released position
- 122: locking device actuator
- 124: spring element
- 126: linear actuator
- 128: brake drum
- 130: brake shoe
- 132: adjuster
- 134: clearance
- 214: locking actuator
- 216: locking device
- 218: locking position
- 222: locking device actuator
- 226: linear actuator
- 228: brake drum
- 230: brake shoe
- 232: adjuster
- 314: locking actuator
- 316: locking device
- 318: locking position
- 322: locking device actuator
- 324: spring element
- 326: linear actuator
- 328: locking plate
- 330: wedge lock
- 406: electro-mechanical brake actuator
- 408: electric motor
- 410: gear
- 412: motor shaft
- 436: push rod
- 438: push rod longitudinal axis
- 440: retracted position
- 442: self-locking worm gear
- 506: electro-mechanical brake actuator
- 508: electric motor
- 510: gear
- 512: motor shaft
- 536: push rod
- 538: push rod longitudinal axis
- 540: retracted position
- 542: self-locking worm gear
- 544: first gear stage
- 546 a,b: second gear stage

## Claims

1. Electro-mechanical brake actuator (6), in particular for a disc brake (4) of a commercial vehicle, said brake actuator (6) comprising:
- an electric motor (8) comprising a motor shaft (12) for providing a driving torque,
- a push rod (436) being movable along a push rod longitudinal axis (438) between a retracted position (440) and an actuated position,
- a gear (10) coupled to the electric motor (8) and the push rod (436), wherein said gear (10) is configured to transform the torque of the motor (8) into a stroke of the push rod (436),
**characterized by** a locking means configured for selectively locking the push rod (436) in said actuated position.

2. The electro-mechanical brake actuator (6) according to claim 1,
wherein the locking means comprises a locking actuator (14, 114, 214, 314) configured for selectively locking the push rod (436) in said actuated position, said locking actuator (14, 114, 214, 314) comprising:
- a locking device (16, 116, 216, 316) that is configured to be moved between a locking position (218), in which the locking device (16, 116, 216, 316) blocks a movement of the push rod (436) and a released position (20, 120), in which the locking device (16, 116, 216, 316) releases said push rod (436), and
- a locking device actuator (22, 122, 222, 322) configured for actuating said locking device (16, 116, 216, 316) between said locking position (218) and said released position (20, 120).

3. The electro-mechanical brake actuator (6) according to claim 2,
**characterized in that** the locking device actuator (22, 122, 222, 322) comprises a spring element (24, 124, 324), wherein said spring element (24, 124, 324) is configured for forcing the locking device (16, 116, 316) into said locking position (218).

4. The electro-mechanical brake actuator (6) according to any of claims 2-3,
wherein the locking device actuator (22, 122, 222, 322) comprises a linear actuator (26, 126, 226, 326) that is configured to move the locking device (16, 116, 216, 316) against the force of the spring element (24, 124, 324) into said released position (20, 120).

5. The electro-mechanical brake actuator (6) according to any of claims 2-4,
wherein the linear actuator (26, 126, 226, 326) comprises:
- an electric motor and a gearbox, and/or
- a solenoid.

6. The electro-mechanical brake actuator (6) according to any of claims 2-5,
wherein said electro-mechanical brake actuator (6) comprises a brake drum (28, 128, 228) coupled to the electric motor (8),
and wherein the locking device (16, 126, 226) comprises a brake shoe (30, 130, 230) that is configured to be moved relative to the brake drum (28, 128, 228) between the locking position (218) at which the brake shoe (30, 130, 230) blocks a movement of the brake drum (28, 128, 228) and the released position (20, 120) at which a movement of the brake drum (28, 128, 228) is enabled.

7. The electro-mechanical brake actuator (6) according to claim 6,
wherein the brake shoe (130, 230) comprises an adjuster (132, 232) configured to adjust a clearance (134) between the brake drum (128, 228) and the brake shoe (130, 230).

8. The electro-mechanical brake actuator (6) according to any of claims 6 or 7,
wherein the brake shoe (130, 230) is arranged inside or outside of the brake drum (128, 228).

9. The electro-mechanical brake actuator (6) according to any of claims 6-8,
wherein the brake drum (28, 128, 228) is coupled to the motor shaft (12) of the electric motor (8).

10. The electro-mechanical brake actuator (6) according to any of claims 2-5,
wherein the locking device (316) comprises a wedge lock (330) that is configured to be moved between the locking position (318), in which the wedge lock (330) blocks a movement of the motor (8), and the released position at which a movement of the motor (8) is enabled.

11. The electro-mechanical brake actuator (6) according to claim 10,
wherein the motor shaft (12) comprises a locking drum (328), and wherein the wedge lock (330) is configured to lock a movement of the locking drum (328).

12. The electro-mechanical brake actuator (6) according to claim 10,
wherein the wedge lock (330) is configured to lock a movement of the motor shaft (12).

13. Electro-mechanical brake actuator (406, 506) according to claim 1,
wherein said locking means comprise a gear (410, 510) being configured as a self-locking gear (442, 542).

14. The electro-mechanical brake actuator (406, 506) according to claim 13,
wherein the self-locking gear (442, 542) is a self-locking worm gear (442, 542).

15. The electro-mechanical brake actuator (506) according to any of claims 13 or 14,
wherein the self-locking gear (542) is part of a first gear stage (544) and
wherein the gear (542) further comprises a second gear stage (546 a, b).

16. A locking actuator (14, 114, 214, 314) for an electro-mechanical brake actuator (6) of a commercial vehicle, in particular for a brake actuator of any one of the preceding claims, wherein said locking actuator (14, 114, 214, 314) is configured for selectively locking a push rod (436) of the electro-mechanical brake actuator (6) in an actuated position, wherein said locking actuator (6) comprises:
- a locking device (16, 116, 216, 316) that is configured to be moved between a locking position (218), in which the locking device (16, 116, 216, 316) blocks a movement of the push rod (436) and a released position (20, 120), in which the locking device (16, 116, 216, 316) releases said push rod (436), and
- a locking device actuator (22, 122, 222, 322) configured for actuating said locking device (16, 116, 216, 316) between said locking position (218) and said released position (20, 120).
